# EUROPEAN PATENT APPLICATION

(11) **EP 4 810 948 A1**
(43) Date of publication of application: **23.09.2026**
(21) Application number: 24891245.3
(22) Date of filing: 31.10.2024
(51) Int. Cl.: G01N 23/223

(54) **X-RAY ANALYSIS DEVICE**

(30) Priority: 16.11.2023 JP 2023195236
(71) Applicant: HORIBA, Ltd., Kyoto-shi Kyoto 601-8510 (JP)
(72) Inventor: AOYAMA, Tomoki, Kyoto-shi, Kyoto 601-8510 (JP); OHASHI, Satoshi, Kyoto-shi, Kyoto 601-8510 (JP); TAJIMA, Mikiya, Kyoto-shi, Kyoto 601-8510 (JP)
(74) Representative: Isarpatent
(86) International application number: PCT/JP2024/038984
(87) International publication number: WO 2025/105205

(57) **Abstract**

There is provided an X-ray analysis device that analyzes elements contained in a measurement sample which is being transported in a predetermined direction, and includes an X-ray irradiation unit that irradiates X-rays onto the measurement sample, an X-ray detection unit that faces the measurement sample and detects X-ray fluorescence emitted from the measurement sample, and a standard sample having known constituent elements that is disposed in an overlapping region where an X-ray irradiation region that is irradiated with X-rays by the X-ray irradiation unit, and an X-ray fluorescence detectable region where X-ray fluorescence is able to be detected by the X-ray detection unit mutually overlap.

## Description

### [Technical Field]

The present invention relates to an X-ray analysis device.

### [Technical Background]

Conventionally, as is shown in Patent Document 1, X-ray fluorescence analyzers have been used to perform quantitative or qualitative analyses of elements contained in transported samples. These X-ray fluorescence analyzers irradiate X-rays from an X-ray source onto a sample being transported, and detect X-ray fluorescence emitted from the sample by using an X-ray detector. As a result, it is possible to determine a composition ratio and film thickness and the like of the sample.

### [Documents of the Prior Art]

### [Patent Documents]

[Patent Document 1] Japanese Patent Publication No. 2022-13497

### [Disclosure of the Invention]

### [Problems to be Solved by the Invention]

However, in a case in which an X-ray detector is being calibrated, in addition to the normal measurement, it is necessary that a separate measurement be performed for this calibration at the measurement location on a standard sample whose constituent components as well as the concentrations thereof are already known. In an X-ray analysis device that analyzes a transported sample such as is described above, a standard sample is positioned adjacent to a processing line, and during the calibration, it is necessary that the X-ray analysis device be temporarily moved in order for the standard sample to be measured. As a result, measurement samples cannot be measured while the standard samples are being measured. This can lead to problems such as there being periods of time for which measurement data cannot be obtained. Moreover, in a case in which a processing line is operated for a long period of time, an additional problem arises in that the intervals between calibrations become longer, so that if there are any deviations in the measurement values during such times, these deviations cannot be detected.

The present invention was conceived in order to solve all of the above problems at once, and it is a principal objective thereof to enable a calibration operation to be performed simultaneously with the analysis of a measurement sample in an X-ray fluorescence analyzer that analyzes a transported measurement sample.

### [Means for Solving the Problem]

In other words, an X-ray analysis device according to the present invention analyzes elements contained in a measurement sample which is being transported in a predetermined direction, and includes an X-ray irradiation unit that irradiates X-rays onto the measurement sample, an X-ray detection unit that faces the measurement sample and detects X-ray fluorescence emitted from the measurement sample, and a standard sample whose constituent elements are already known that is disposed in an overlapping region where an X-ray irradiation region that is irradiated with X-rays by the X-ray irradiation unit, and an X-ray fluorescence detectable region where X-ray fluorescence is able to be detected by the X-ray detection unit mutually overlap.

If this type of structure is employed, then because a standard sample whose constituent elements are already known is disposed in an overlapping region between an X-ray irradiation region that is irradiated by the X-ray irradiation unit and an X-ray fluorescence detectable region where X-ray fluorescence is able to be detected by the X-ray detection unit, in the X-ray detection unit it is possible for X-ray fluorescence emitted from the measurement sample and X-ray fluorescence emitted from the standard sample to be detected simultaneously. As a result, it is possible to perform the task of calibrating an X-ray detection unit simultaneously with the task of analyzing a measurement sample. For example, by storing in advance information relating to the energy of the X-ray fluorescence of elements contained in a standard sample, and then comparing the energy of these elements contained in the standard sample with the peak positions of these elements in a spectrum which is created based on an output of the X-ray detection unit, and by then calculating the amount of deviation therebetween, it is possible to calibrate the energy of the X-ray analysis device.

An example of specific aspect of the above-described X-ray analysis device is an X-ray analysis device that additionally includes a spectrum creation unit that, based on an output from the X-ray detection unit, creates a measured spectrum, which is a spectrum of the X-ray fluorescence emitted from the measurement sample, an element information storage unit that stores first energy information relating to the energy of X-ray fluorescence that is specific to a first element contained in the standard sample, a peak detection unit that detects a peak corresponding to the first element by analyzing the created measured spectrum, and a calibration unit that performs energy calibration based on the first energy information stored in the element information storage unit, and on information relating to a position of the peak of the first element detected by the peak detection unit.

If this type of structure is employed, then by comparing the first energy information with the position of the peak of the first element, it becomes possible to ascertain an amount of deviation therebetween, and to thereby perform energy calibration of the X-ray analysis device.

Moreover, in the above-described X-ray analysis device it is preferable that the standard sample or the measurement sample contain a second element that is different from the first element, and that the element information storage unit store second energy information relating to the energy of X-ray fluorescence that is specific to the second element, and that the peak detection unit detect a peak corresponding to the second element by analyzing the measured spectrum, and that the calibration unit perform energy calibration based on the first energy information and the second energy information that are stored in the element information storage unit, and on information relating to positions of the respective peaks of the first element and the second element detected by the peak detection unit.

If this type of structure is employed, then by utilizing information relating to the positions of two peaks in the fluorescence spectrum, it becomes possible to perform energy calibration of the X-ray analysis device even more accurately.

In order to enable an intensity calibration of an X-ray analysis device to be performed simultaneously with an analysis of a measurement sample, it is desirable that the element information storage unit further store standard intensity information relating to an intensity of X-ray fluorescence originating from the first element, which was acquired in advance by irradiating X-rays onto the standard sample, and that the calibration unit perform an intensity calibration based on standard intensity information stored in the element information storage unit, and on information relating to a peak intensity of the first element which was detected by the peak detection unit.

Moreover, in the above-described X-ray analysis device it is preferable that the spectrum creation unit create, as the measured spectrum, an analysis spectrum that is provided for analyzing the measurement sample and a calibration spectrum that is provided for performing a calibration in the calibration unit, and that the number of spectrum accumulations when the calibration spectrum is being created is set so as to be greater than the number of spectrum accumulations when the analysis spectrum is being created.

If this type of structure is employed, then by using a calibration spectrum having a greater number of spectrum accumulations and a comparatively higher signal-to-noise ratio than an analysis spectrum when performing a calibration, while simultaneously performing, at short intervals, quantitative analysis of a measurement sample using an analysis spectrum having a comparatively smaller number of spectrum accumulations, it becomes possible for a calibration operation to be performed accurately.

It is preferable that the above-described spectrum creation unit create the calibration spectrum by accumulating, from among a plurality of the most recently created measured spectra, a plurality of measured spectra having few noise components in the vicinity of a peak that corresponds to the first element.

If this type of structure is employed, then by accumulating spectra having few noise components (i.e., background noise) in the vicinity of a peak that corresponds to the first element, it becomes possible to create a far more accurate spectrum to use as the calibration spectrum that is compared with the first energy information.

It is preferable that the above-described X-ray analysis device be further provided with a reference spectra storage unit in which reference spectra that are used by the calibration unit to determine a calibration timing are stored in advance, and with a spectrum comparison unit that compares the reference spectra stored in the reference spectra storage unit with a measured spectrum created by the spectrum creation unit, and determines whether or not they are similar to each other, wherein, if it is determined by the spectrum comparison unit that the measured spectrum and the reference spectra are similar to each other, then the peak detection unit performs an analysis of the measured spectrum.

If this type of structure is employed, then because it is only possible to perform calibration in a case in which a spectrum has a high degree of similarity to a reference spectrum that has been stored in advance, a calibration operation can be performed at an appropriate timing without any external command being required. This aspect is particularly effective in a case in which a measurement sample is one that repeatedly manifests different states, for example, such as when a film is coated intermittently onto a substrate or the like.

Another example of specific aspect of the above-described X-ray analysis device is an X-ray analysis device in which the measurement sample repeatedly exhibits a plurality of states in which the component elements are mutually different in the overlapping region as the measurement sample is being transported, and the reference spectrum is a spectrum that is created based on an output from the X-ray detection unit in one of the plurality of states.

Because the peak position of the first element that is detected gradually shifts due to changes in the temperature of the surrounding environment and the like, it is rare for this peak position to suddenly change during an analysis.

For this reason, in the above-described X-ray analysis device, it is preferable that the element information storage unit store, as the first energy information, a reference peak position which is a peak position corresponding to the energy of X-ray fluorescence that is specific to the first element, and that, in a case in which an amount of deviation between a peak position of the first element which is detected by the peak detection unit and the reference peak position which is stored in the element information storage unit is greater than a predetermined value, the calibration unit perform an energy calibration operation.

If this type of structure is employed, then, instead of performing an energy calibration operation each time a measured spectrum is analyzed and a peak position is detected, by performing an energy calibration operation at a stage at which the peak position of the first element contained in the standard sample has gradually fluctuated, and has shifted from the reference peak position to such an extent that the measurement accuracy may be affected, it is possible to reduce the frequency of performing calibration operations while securing the measurement accuracy, and to improve processing speed in the calibration unit.

It is also preferable that, in the above-described X-ray analysis device, the peak detection unit detect a peak corresponding to the first element from the measured spectrum by referring to information relating to the reference peak position that is stored in the element information storage unit.

If this type of structure is employed, then because the search for the peak of the first element by the peak detection unit is performed initially from the vicinity of a reference peak position where there is a high likelihood of the peak of the first element being present, the time required for peak detection can be shortened.

However, in order to detect only X-ray fluorescence originating from a measurement sample in the X-ray detection unit and thereby reduce noise components, it is desirable that the overlapping region between the X-ray irradiation region that is irradiated by the X-ray irradiation unit and the detectable region where detection by the X-ray detection unit is possible be formed only in the vicinity of the surface of the measurement sample. However, in a case in which transported measurement samples are analyzed, such as in the present invention, then if the measurement sample is transported, for example, by a conveyor belt, or if the measurement sample is a film that is transported roll-to-roll, because the measurement sample may flap about while being transported, if a standard sample is disposed in the overlapping region formed in the vicinity of the surface of the measurement sample, there is a concern that the measurement sample that is flapping about may come into contact with the standard sample.

Therefore, in the above-described X-ray analysis device, if the possibility of the measurement sample flapping about is to be considered, then it is desirable that the overlapping region be set not only in the vicinity of the surface of the measurement sample, but also in a location which is a sufficient distance (i.e., a safe distance) from this surface, and that the standard sample be disposed in this overlapping region at that safe distance. This safe distance is set such that even if a transported measurement sample does flap about, it will not interfere with (i.e., reach as far as) the standard sample.

Another example of a more specific aspect of the above-described X-ray analysis device is an X-ray analysis device that is further provided with a housing that houses the X-ray irradiation unit and the X-ray detection unit and has an opening formed in one side wall thereof through which the X-rays emitted from the X-ray irradiation unit and the X-ray fluorescence emitted from the measurement sample are transmitted, and in which the standard sample is disposed in the overlapping region set in the vicinity of the opening in the housing.

If this type of structure is employed, then by providing an overlapping region within the housing, and placing the standard sample in the overlapping area within the housing, the X-ray irradiation unit and the X-ray detection unit can be located as close as possible to the surface of the measurement sample while the standard sample can still be disposed at a safe distance.

An example of a specific aspect of the standard sample is a standard sample that is in the form of a wire, mesh, ring, or film.

If the standard sample is provided in a form such as those described above, then even if the standard sample is disposed in the overlapping region, it is still easy for a majority of the X-rays emitted from the X-ray irradiation unit and directed toward the measurement sample to be transmitted therethrough, and for a majority of the X-ray fluorescence generated by the measurement sample and directed toward the X-ray detection unit to be transmitted therethrough. Consequently, it is possible to perform a calibration operation without this interfering with the analysis of a measurement sample.

### [Effects of the Invention]

According to the present invention which is formed in the manner described above, in an X-ray fluorescence analysis device that analyzes a transported measurement sample, it is possible to perform a calibration operation simultaneously with an analysis of a measurement sample.

### [Brief Description of the Drawings]

[FIG. 1] FIG. 1 is a view showing an overall structure of an X-ray analysis device according to an embodiment of the present invention.
[FIG. 2] FIG. 2 is a function block diagram showing the X-ray analysis device of the same embodiment.
[FIG. 3] FIG. 3 is a plan view showing a structure in the vicinity of an opening in the X-ray analysis device of the same embodiment.
[FIG. 4] FIG. 4 is a view showing an example of a fluorescence spectrum obtained by the X-ray analysis device of the same embodiment.

### [Best Embodiments for Implementing the Invention]

Hereinafter, an X-ray analysis device 100 according to an embodiment of the present invention will be described with reference to the drawings.

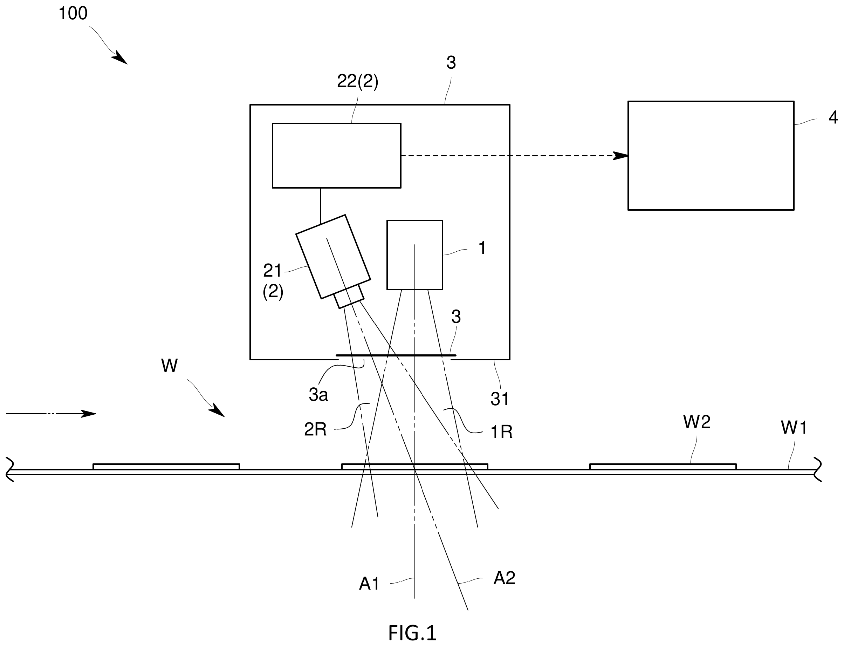

As is shown in FIG. 1, the X-ray analysis device 100 of the present embodiment is a device (commonly known as an X-ray fluorescence analyzer) that irradiates X-rays (also called primary X-rays) onto a measurement sample W that is being transported in a predetermined transport direction (i.e., a left-right direction in the diagram), and then detects X-ray fluorescence (also called secondary X-rays) emitted from the measurement sample W so as to perform quantitative analysis or qualitative analysis of elements contained in the measurement sample W. As is described in detail below, the X-ray analysis device 100 of the present embodiment is configured so as to analyze elements contained in a transported measurement sample W while simultaneously calibrating an X-ray detection unit 2 (in other words, while the measurement sample W is being transported).

The measurement sample W of the present embodiment is formed by coating a film material W2 onto one surface of a film-shaped substrate W1, and this measurement sample W is transported at a substantially constant speed in a transport direction by, for example, a roll-to-roll transporting mechanism (not shown in the drawings). Note that the film material W2 that is used to form the measurement sample W is coated onto the surface of the base material W1 at substantially uniform intervals in the transport direction. The X-ray analysis device 100 is disposed so as to be able to irradiate X-rays onto the film material W2 of the measurement sample W, and then detect the secondary X-rays that are emitted therefrom.

More specifically, this X-ray analysis device 100 is provided with an X-ray irradiation unit 1 that irradiates primary X-rays onto the measurement sample W, an X-ray detection unit 2 that detects secondary X-rays emitted from the measurement sample W, and an information processing device 4 that analyzes the measurement sample W based on an output from the X-ray detection unit 2.

The X-ray irradiation unit 1 is provided with an X-ray source and a collimator. The X-ray source is provided with an X-ray tube, and generates primary X-rays by exciting a target metal using thermoelectrons generated from a filament. The collimator has a transmission window through which the primary X-rays generated by the X-ray source are transmitted, and the irradiation angle of the primary X-rays is narrowed by this transmission window.

The X-ray irradiation unit 1 of this embodiment which is formed in the manner described above irradiates radiating primary X-rays that spread out at a predetermined radiation angle θ1 towards the measurement sample W. In the present embodiment, the X-ray source is positioned so that a center axis A1 of the irradiated primary X-rays is orthogonal to the surface of the measurement sample W.

The X-ray detection unit 2 includes an X-ray detector 21 and a signal processing unit 22 that processes signals from the X-ray detector 21 and then outputs them to the information processing device 4.

The X-ray detector 21 is configured using an X-ray detection element such as, for example, a Si element or the like (for example, a silicon drift detector (SDD)). A field of view θ2 in which the secondary X-rays are able to be detected is set within a predetermined range in the X-ray detector 21, and the X-ray detector 21 is able to detect secondary X-rays that are emitted from within this field of view. The X-ray detector 21 is disposed so that a central axis A2 of its detection field of view is inclined relative to the surface of the measurement sample W.

The signal processing unit 22 detects the cumulative amount of electric charge that is output as a result of X-ray fluorescence emitted from the measurement sample W entering the X-ray detector 21, and converts this cumulative amount into an accumulated signal (i.e., a voltage signal) that corresponds to the cumulative amount. The signal processing unit 22 then shapes the accumulated signal into a trapezoidal pulse signal having a pulse height value that corresponds to the energy of the X-ray fluorescence, detects the pulse height value of this pulse signal, and outputs it to the information processing device 4. In the present embodiment, a calibration coefficient (hereinafter, this may also be referred to as a first calibration coefficient) that is used for performing energy calibration is stored in advance in the signal processing unit 22, and the signal processing unit 22 calculates a calibrated pulse height value by multiplying the first calibration coefficient by the detected pulse height value. The signal processing unit 22 then uses a multi-channel analyzer to count the calibrated pulse height values according to each pulse height, and outputs count data per each pulse height, which indicates the count number for each pulse height, to the information processing device 4. Note that the signal processing unit 22 accumulates the count numbers for each pulse height that are output from the multi-channel analyzer for a predetermined time, and then outputs these count numbers for each pulse height to the information processing device 4 as count data for each pulse height.

The X-ray irradiation unit 1 and X-ray detection unit 2 are housed in a housing 3. An opening 3a is formed in one side wall 31 of the housing 3, and primary X-rays emitted from the X-ray irradiation unit 1 at a radiation angle of θ1 are transmitted through the opening 3a and are irradiated onto the measurement sample W. Secondary X-rays that are emitted from the measurement sample W are then transmitted through the opening 3a and are detected by the X-ray detector 21.

An irradiation region 1R onto which the primary X-rays are irradiated from the X-ray irradiation unit 1 and a detectable region 2R in which the secondary X-rays can be detected by the X-ray detector 21 are provided within the housing 3 such that they overlap on at least a surface of the measurement sample W. As is shown in FIG. 1, the irradiation region 1R of the X-ray irradiation unit 1 and the detectable region 2R of the X-ray detector 21 overlap each other even in the vicinity of the opening 3a in the housing 3.

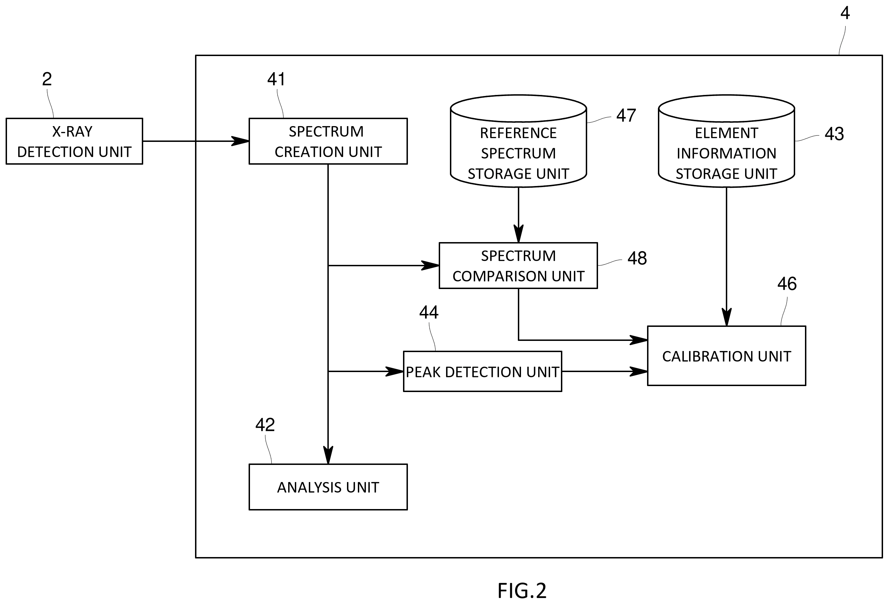

The information processing device 4 is a computer having a CPU, memory, an input/output interface, a display, and input means and the like and, as shown in FIG. 2, performs at least the functions of a spectrum creation unit 41 that creates an X-ray fluorescence spectrum based on an output from the X-ray detection unit 2 (i.e., the calibrated pulse height values), and an analysis unit 42 that performs qualitative or quantitative analysis of elements contained in the measurement sample W based on the X-ray fluorescence spectrum. The fluorescence spectrum displays an intensity of the secondary X-rays (i.e., a count number per second) as a function of energy.

The spectrum creation unit 41 creates an X-ray spectrum based on the count data per pulse height output from the X-ray detection unit 2. In the present embodiment, a calibration coefficient (hereinafter, this may also be referred to as a second calibration coefficient) that is used for performing energy calibration is stored in advance in the spectrum creation unit 41, and the spectrum creation unit 41 outputs a calibrated X-ray spectrum (hereinafter, this may also be referred to as a measured spectrum) that is obtained by multiplying the second calibration coefficient by the X-ray intensity of the created X-ray spectrum. The spectrum creation unit 41 of the present embodiment is configured so as to create measured spectra at predetermined time intervals (for example, every 3 seconds), and output these sequentially to the analysis unit 42.

In this way, the X-ray analysis device 100 of the present embodiment is provided with a standard sample 5 that is disposed at a predetermined position (i.e., a calibration position) in the overlapping region where the irradiation region 1R of the X-rays irradiated from the X-ray irradiation unit 1 and the detectable region 2R where X-ray fluorescence can be detected by the X-ray detection unit 2 mutually overlap, so that this X-ray analysis device 100 is able to calibrate the X-ray detection unit 2 while analyzing a measurement sample W that is being transported. This standard sample 5 is used to calibrate the X-ray detection unit 2 and contains one or a plurality of types of elements having known concentrations (none of which are contained in the measurement sample W). In the present embodiment, the standard sample 5 contains Mo (hereinafter, this may be referred to as the first element) as an element whose concentration is known.

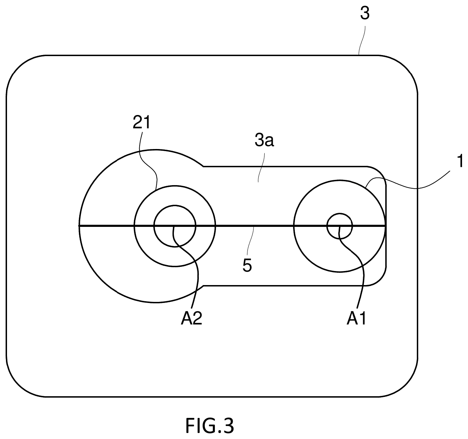

The standard sample 5 has properties that, while being disposed in the overlapping region, enable it to transmit a greater part (for example, more than 90%) of the X-rays irradiated from the X-ray irradiation unit 1 towards the measurement sample W, and also transmit a greater part (for example, more than 90%) of the X-ray fluorescence emitted from measurement sample W towards the X-ray detection unit 2. In the present embodiment, specifically, the standard specimen 5 is a single metal wire and, as shown in FIG. 3, when viewed from the measurement specimen W side, the standard specimen 5 is arranged so as to extend in the direction in which the X-ray source and the X-ray detector 21 are aligned. More specifically, the standard specimen 5 is disposed so as to coincide with a straight line connecting a central axis A1 of the X-ray source with a central axis A2 of the field of view of the X-ray detector 21.

Furthermore, the standard sample 5 is disposed in a position where it will not interfere with the measurement sample W even in a case in which the measurement sample W being transported is flapping about. More specifically, the standard sample 5 is positioned at a safe distance from the surface of the measurement sample W, which is a distance that will not allow the standard sample 5 to reach as far as the surface of measurement sample W even if the transported measurement sample W flaps about. Yet more specifically, in the present embodiment, the positions and orientations of the X-ray irradiation unit 1 and the X-ray detection unit 2 are set so that an overlapping region between them is formed within the housing 3, and the standard specimen 5 is disposed in the overlapping region in the vicinity of the opening 3a in the housing 3.

The information processing device 4 of the present embodiment further performs the functions of an element information storage unit 43, a peak detection unit 44, and a calibration unit 46.

The element information storage unit 43 stores, in advance, first energy information that relates to the energy of X-ray fluorescence that is specific to a first element contained in the standard sample 5, and second energy information relating to the energy of X-ray fluorescence that is specific to a second element which is different from the first element. The second element is an element contained in standard sample 5 or measurement sample W and, in the present embodiment, the second element is the element contained in the measurement sample W.

The element information storage unit 43 stores standard intensity information that relates to the intensity of the X-ray fluorescence originating from the first element, and that has been acquired in advance by irradiating X-rays from the X-ray irradiation unit 1 onto the standard sample 5 which has been set in the calibration position.

The peak detection unit 44 analyzes the measured spectrum created by the spectrum creation unit 41 in accordance with a predetermined algorithm, such as, for example, a peak fitting method or the like, and detects peaks corresponding respectively to the first element and second element.

The calibration unit 46 is configured so as to perform energy calibration of the X-ray detection unit 2 based on the first energy information and second energy information stored in the element information storage unit 43 and on information relating to the positions of the respective peaks of the first element and the second element detected by the peak detection unit 44.

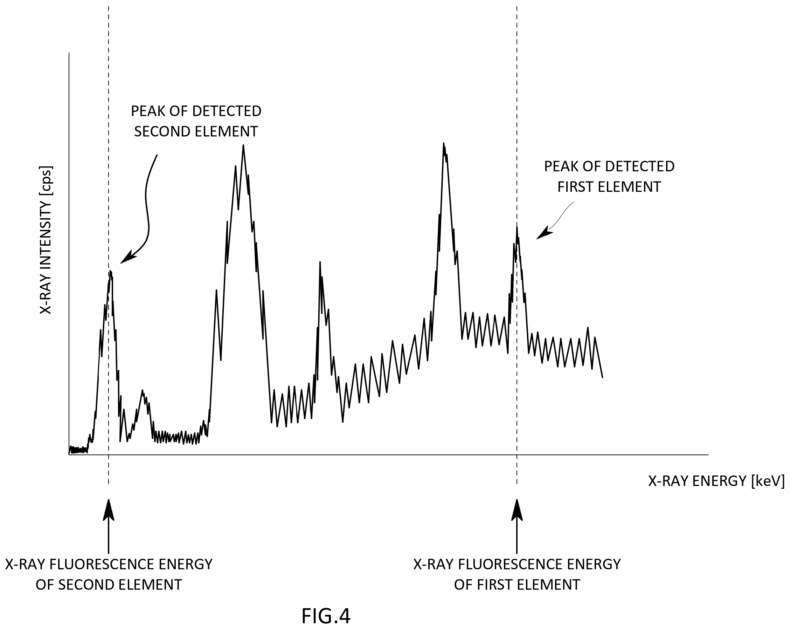

More specifically, the calibration unit 46 respectively calculates amounts of deviation between the X-ray fluorescence energy indicated by the detected peak position of the first element and the detected peak position of the second element, and the X-ray fluorescence energy indicated by the first energy information and the second energy information, and then performs energy calibration on the X-ray detection unit 2 so as to eliminate these deviations. More specifically, the first calibration coefficients stored in advance in the signal processing unit 22 of the X-ray detection unit 2 are updated so that the calculated deviation is eliminated. Even more specifically, as is shown in FIG. 4, the measured spectrum created by spectrum creation unit 41 contains a peak originating from the first element contained in standard sample 5, and a peak originating from the second element contained in the measurement sample W. The calibration unit 46 performs energy calibration (more specifically, updates the stored first calibration coefficient) by comparing the energies indicated respectively by the positions of these two peaks with the X-ray fluorescence energies indicated respectively by the first energy information and the second energy information.

Furthermore, the calibration unit 46 of the present embodiment is configured so as to perform intensity calibration based on the standard intensity information stored in the element information storage unit 43, and on information relating to the peak intensity of the first element detected by the peak detection unit 44. More specifically, the calibration unit 46 compares the intensity of the X-ray fluorescence originating from the first element indicated by the standard intensity information, with the peak intensity of the detected first element, and then calculates the amount of deviation therebetween. The calibration unit 46 then updates the second calibration coefficient stored in the spectrum creation unit 41 so that this deviation amount is eliminated.

Moreover, in the X-ray analysis device 100 of the present embodiment, the information processing device 4 further performs the functions of a reference spectrum storage unit 47, and a spectrum comparison unit 48 so that the calibration operation performed by the calibration unit 46 can be executed at an appropriate timing.

The reference spectrum storage unit 47 stores in advance a reference spectrum that is used to determe the timing of a calibration performed by the calibration unit 46. As is described above, as the measurement sample W of the present embodiment is being transported, the surface of the film material W2 and the surface of the substrate W1 appear alternately in the overlapping region. As a result, the sample W repeatedly displays various states (more specifically, two states) having different constituent elements. This reference spectrum is a fluorescence spectrum obtained by irradiating X-rays onto the measurement sample W, which is set before the start of the analysis so as to be in one state out of the aforementioned plurality of states. In the present embodiment, the reference spectrum is set as the spectrum of the X-ray fluorescence emitted from the substrate W1, however, the present invention is not limited to this.

The spectrum comparison unit 48 compares a reference spectrum stored in the reference spectrum storage unit 47 with the measured spectrum created by the spectrum creation unit 41 in order to determine whether they are similar to each other. More specifically, the spectrum comparison unit 48 calculates the degree of similarity between a reference spectrum and a measurement spectrum based on a predetermined known algorithm, and determines that the spectra are similar to each other if this degree of similarity is equal to or greater than a predetermined value.

If the spectrum comparison unit 48 determines that the measured spectrum and the reference spectrum are mutually similar, then the calibration unit 46 performs a calibration operation. More specifically, if a similarity determination is made by the spectrum comparison unit 48, then this determination acts as a trigger for the peak detection unit 44 to analyze the measured spectrum and detect the peaks of the first and second elements, and for the calibration unit 46 to perform a calibration (i.e., an energy calibration and/or intensity calibration) operation.

Furthermore, in the present embodiment, in order to speed up the peak detection operation by the peak detection unit 44, and in order to thereby also speed up the calibration operation, the peak detection unit 44 refers to the first energy information and the second energy information stored in the element information storage unit 43, and then detects the peaks that correspond respectively to the first element and the second element from the measured spectrum. More specifically, in the present embodiment, the element information storage unit 43 stores, as the first energy information and the second energy information, a first reference peak position and a second reference peak position, which are peak positions corresponding to the energies of the X-ray fluorescence that is specific to the first element and the second element respectively. The peak detection unit 44 then detects the respective peaks of the first element and the second element from the newly created measured spectrum using as references the first reference peak position and the second reference peak position.

Furthermore, in the present embodiment, the calibration unit 46 is configured so as to compare the peak position of the first element that was detected by the peak detection unit 44 from the newly created measured spectrum with the first reference peak position stored in the element information storage unit 43, and in a case in which the amount of deviation is greater than or equal to a predetermined value, the calibration unit 46 performs energy calibration on the X-ray detection unit 2.

According to the X-ray analysis device 100 of the present embodiment that is formed in the manner described above, because a standard sample 5 having known constituent elements is disposed in the overlapping region where the irradiation region 1R onto which the X-rays are irradiated from the X-ray irradiation unit 1 and the detectable region 2R where the X-ray fluorescence can be detected by the X-ray detection unit 2 mutually overlap, in the X-ray detection unit 2, it is possible for the X-ray fluorescence emitted from the measurement sample W and the X-ray fluorescence emitted from the standard sample 5 to be detected simultaneously, so that it is possible for the measurement sample W to be analyzed at the same time as the X-ray detection unit 2 is being calibrated. For example, by storing, in advance, information relating to the X-ray fluorescence energy of an element contained in the standard sample 5, and comparing the energy of the element contained in the standard sample 5 with the peak position of that element in a spectrum created based on the output from the X-ray detection unit 2, and then calculating the amount of deviation therebetween, it is possible to perform energy calibration on the X-ray detection unit 2.

Note that the present invention is not limited to the above-described embodiment.

For example, in the above-described embodiment, the metal wire serving as the standard sample 5 is disposed so as to extend in the direction in which the X-ray source and the X-ray detector 21 are arranged in a row, however, the present invention is not limited to this. In a variant embodiment, it is also possible for the metal wire serving as the standard sample 5 to be disposed so as to extend in an orthogonal direction relative to the direction in which the X-ray source and X-ray detector 21 are arranged. In this case, it is also possible for a plurality of metal wires to be arranged side-by-side in the direction in which the X-ray source and X-ray detector 21 are arranged.

Moreover, in a variant embodiment, the standard sample 5 is not limited to being a metal wire, but may instead be, for example, in the form of a mesh or film. In a case in which the standard sample 5 is in the form of a film, it may be, for example, a resin film such as polyimide or the like, or may be formed by vapor-depositing a metal layer onto a thin film through which X-rays are able to easily penetrate, such as, for example, rolled beryllium foil or a graphene film or the like.

Moreover, in the above-described embodiment, the second element is contained in the measurement sample W, however, the present invention is not limited to this. In a variant embodiment, the second element may instead be contained in the standard sample 5.

Furthermore, in the X-ray analysis device 100 of the above-described embodiment, the calibration unit 46 calibrates the X-ray detector 21 based on information about the two peaks of the first element and the second element, however, the present invention is not limited to this. In a variant embodiment, it is also possible for the calibration unit 46 to calibrate the X-ray detector 21 using only information about the peak of the first element, without using information about the peak of the second element.

Moreover, it is also possible for the X-ray analysis apparatus 100 of a variant embodiment to not be provided with the functions of the reference spectrum storage unit 47 and the spectrum comparison unit 48. Provided that the X-ray analysis device 100 of the embodiments is able to perform the functions of the spectrum creation unit 41, the element information storage unit 43, the peak detection unit 44, and the calibration unit 46, then the X-ray analysis device 100 is able to perform energy calibration and/or intensity calibration.

Furthermore, the measured spectrum created by the spectrum creation unit 41 may have the same number of spectrum accumulations (or accumulation times) for the spectra used for quantitative analysis in the analysis unit 42 and for the various calibrations in the calibration unit 46, or mutually different numbers. For example, when creating measured spectra (i.e., calibration spectra) to be used for various calibrations in the calibration unit 46, it is possible for the number of spectrum accumulations to be increased (or to lengthen the accumulation time thereof) compared to when creating measured spectra (i.e., analysis spectra) to be used for quantitative analysis in the analysis unit 42. If this type of structure is employed, then it becomes possible to perform accurate calibration operations, while performing quantitative analysis at rapid intervals. For example, it is also possible to create a calibration spectrum by accumulating, for the most recent plurality of times, analysis spectra that were obtained every 3 seconds by accumulating the spectra from a 3 second period.

Moreover, when creating a calibration spectrum, it is preferable that the spectrum creation unit 41 accumulate, from among the plurality of most recently created analysis spectra, a plurality of analysis spectra having few noise components in the vicinity of a peak corresponding to the first element. The term 'noise components in the vicinity of the peak corresponding to the first element' refers, for example, to noise components originating from the first element contained in the measurement sample but not in the standard sample, or noise caused by scattered X-rays. In other words, the term 'analysis spectrum having few noise components in the vicinity of the peak corresponding to the first element' refers to a spectrum in which a peak originating from the first element contained in the calibration sample is easy to detect.

Furthermore, it is more preferable that the spectrum creation unit 41 create a calibration spectrum by accumulating, from among the plurality of most recently created analysis spectra, a plurality of analysis spectra that have few noise components in the vicinity of a peak corresponding to the first element, and in which a peak corresponding to the second element is evident.

Moreover, it is also possible for the spectrum creation unit 41 to refer to the degree of similarity between a created analysis spectrum and a reference spectrum calculated by the spectrum comparison unit 48 in order to determine whether or not the created analysis spectrum is an 'analysis spectrum having few noise components in the vicinity of the peak corresponding to the first element'. For example, in a case in which the degree of similarity between an analysis spectrum and a reference spectrum is greater than a predetermined value, the analysis spectrum for which that similarity was calculated can be flagged as 'an analysis spectrum suitable for accumulation in order to create a calibration spectrum'.

In another variant embodiment, it is also possible for the X-ray analysis apparatus 100 to include a distance measurement sensor that measures a distance between itself and the measurement sample W that has entered the overlapping region, and an image acquisition device that captures an image of the measurement sample W that has entered the overlapping region, and for the spectrum creation unit 41 to determine whether or not a created analysis spectrum is 'an analysis spectrum having few noise components in the vicinity of a peak corresponding to the first element' based on information output from the distance measurement sensor or the image acquisition device. It is also possible for the spectrum creation unit 41 to determine whether or not a created analysis spectrum is 'an analysis spectrum having few noise components in the vicinity of a peak corresponding to the first element' based on various types of information output from the transporting mechanism (for example, information relating to transport speed, or time, or the like).

For example, as in the above-described embodiment, in a case in which the measurement sample W is formed by coating a film material W2 intermittently onto one surface of a film-like substrate W1, it is possible for only an analysis spectrum created based on the X-ray fluorescence emitted from the film material W2 to be flagged as 'an analysis spectrum suitable for accumulation in order to create a calibration spectrum' by referring to information output from the distance measurement sensor, the image acquisition device, or the transporting mechanism.

In the X-ray analysis device 100 of the above-described embodiment, a structure is employed in which the first calibration coefficient for performing energy calibration is stored in the X-ray detection unit 2, and the X-ray detection unit 2 performs the energy calibration, however, the present invention is not limited to this. In another variant embodiment, it is also possible for the first calibration coefficient to be stored in the information processing device 4, and for the information processing device 4 to perform the energy calibration (for example, in the spectrum creation unit 41).

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as limited by the foregoing description and is only limited by the scope of the appended claims.

### [Industrial Applicability]

According to the present invention, in an X-ray fluorescence analysis device that analyzes a transported measurement sample, it is possible to perform a calibration operation simultaneously with an analysis of a measurement sample.

### [Description of the Reference Numerals]

- 100: X-ray Analysis Device
- 1: X-ray Irradiation Unit
- 1R: Irradiation Region
- 2: X-ray Detection Unit
- 2R: Detection-Capable Region
- 5: Standard Sample
- W: Measurement Sample

## Claims

1. An X-ray analysis device that analyzes elements contained in a measurement sample which is being transported in a predetermined direction, comprising:
an X-ray irradiation unit that irradiates X-rays onto the measurement sample;
an X-ray detection unit that faces the measurement sample and detects X-ray fluorescence emitted from the measurement sample; and
a standard sample whose constituent elements are already known that is disposed in an overlapping region where an X-ray irradiation region that is irradiated with X-rays by the X-ray irradiation unit, and an X-ray fluorescence detectable region where X-ray fluorescence is able to be detected by the X-ray detection unit mutually overlap.

2. The X-ray analysis device according to Claim 1, further comprising:
a spectrum creation unit that, based on an output from the X-ray detection unit, creates a measured spectrum, which is a spectrum of the X-ray fluorescence emitted from the measurement sample;
an element information storage unit that stores first energy information relating to the energy of X-ray fluorescence that is specific to a first element contained in the standard sample;
a peak detection unit that detects a peak corresponding to the first element by analyzing the created measured spectrum; and
a calibration unit that performs energy calibration based on the first energy information stored in the element information storage unit, and on information relating to a position of the peak of the first element detected by the peak detection unit.

3. The X-ray analysis device according to Claim 2, wherein
the standard sample or the measurement sample contains a second element that is different from the first element,
the element information storage unit stores second energy information relating to the energy of X-ray fluorescence that is specific to the second element,
the peak detection unit detects a peak corresponding to the second element by analyzing the measured spectrum, and
the calibration unit performs energy calibration based on the first energy information and the second energy information that are stored in the element information storage unit, and on information relating to the positions of the respective peaks of the first element and the second element detected by the peak detection unit.

4. The X-ray analysis device according to Claim 2 or Claim 3, wherein
the element information storage unit further stores standard intensity information relating to an intensity of X-ray fluorescence originating from the first element, which was acquired in advance by irradiating X-rays onto the standard sample, and
the calibration unit performs an intensity calibration based on standard intensity information stored in the element information storage unit, and on information relating to a peak intensity of the first element which was detected by the peak detection unit.

5. The X-ray analysis device according to any one of Claims 2 through 4, wherein the spectrum creation unit creates, as the measured spectrum, an analysis spectrum that is provided for analyzing the measurement sample and a calibration spectrum that is provided for performing a calibration in the calibration unit, and the number of spectrum accumulations when the calibration spectrum is being created is set so as to be greater than the number of spectrum accumulations when the analysis spectrum is being created.

6. The X-ray analysis device according to Claim 5, wherein
the spectrum creation unit creates the calibration spectrum by accumulating, from among a plurality of the most recently created measured spectra, a plurality of measured spectra having few noise components in the vicinity of a peak that corresponds to the first element

7. The X-ray analysis device according to any one of Claims 2 through 6, further comprising:
a reference spectra storage unit in which reference spectra that are used by the calibration unit to determine a calibration timing are stored in advance; and
a spectrum comparison unit that compares the reference spectra stored in the reference spectra storage unit with a measured spectrum created by the spectrum creation unit, and determines whether or not they are similar to each other, wherein,
if it is determined by the spectrum comparison unit that the measured spectrum and the reference spectra are similar to each other, then the peak detection unit performs an analysis of the measured spectrum.

8. The X-ray analysis device according to Claim 7, wherein
the measurement sample repeatedly exhibits a plurality of states whose component elements are mutually different from each other in the overlapping region as the measurement sample is being transported, and
the reference spectrum is a spectrum that is created based on an output from the X-ray detection unit in one of the plurality of states.

9. The X-ray analysis device according to any one of Claims 2 through 8, wherein
the element information storage unit stores, as the first energy information, a reference peak position which is a peak position corresponding to the energy of X-ray fluorescence that is specific to the first element, and,
in a case in which an amount of deviation between a peak position of the first element which is detected by the peak detection unit and the reference peak position which is stored in the element information storage unit is greater than a predetermined value, then the calibration unit performs an energy calibration operation.

10. The X-ray analysis device according to Claim 9, wherein the peak detection unit detects a peak corresponding to the first element from the measured spectrum by referring to information relating to the reference peak position that is stored in the element information storage unit.

11. The X-ray analysis device according to any one of Claims 1 to 10, wherein the standard sample is disposed in a region located at a safe distance from a surface of the measurement sample being transported so as to be unable to come into contact with that surface.

12. The X-ray analysis device according to any one of Claims 1 to 11, wherein the-ray analysis device further comprises a housing that houses the X-ray irradiation unit and the X-ray detection unit and has an opening formed in one side wall thereof through which the X-rays emitted from the X-ray irradiation unit and the X-ray fluorescence emitted from the measurement sample are transmitted, and wherein
the standard sample is disposed in the overlapping region set in the vicinity of the opening in the housing.

13. The X-ray analysis device according to any one of Claims 1 to 12, wherein the standard sample is in the form of a wire, mesh, ring, or film.

14. The X-ray analysis device according to any one of Claims 1 to 13, wherein elements contained in the standard sample are different from elements contained in the measurement sample.
